(19) Europäisches Patentamt
European Patent Office
Office européen des brevets

(11) **EP 4 053 187 A1**

(12) **EUROPEAN PATENT APPLICATION**
published in accordance with Art. 153(4) EPC

(43) Date of publication:
07.09.2022 Bulletin 2022/36

(51) International Patent Classification (IPC):
C08G 69/00 (2006.01)          C08K 7/02 (2006.01)
C08L 1/02 (2006.01)          C08L 77/00 (2006.01)
C08K 3/013 (2018.01)

(21) Application number: 20881285.9

(22) Date of filing: 06.10.2020

(52) Cooperative Patent Classification (CPC):
C08G 69/00; C08K 3/013; C08K 7/02; C08L 1/02;
C08L 77/00

(86) International application number:
PCT/JP2020/037892

(87) International publication number:
WO 2021/085056 (06.05.2021 Gazette 2021/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.10.2019 JP 2019196995
03.06.2020 JP 2020096866

(71) Applicant: Unitika Ltd.
Amagasaki-shi, Hyogo 660-0824 (JP)

(72) Inventors:
• TOMOTOSHI, Tsuyoshi
Uji-shi, Kyoto 611-0021 (JP)
• NOGUCHI, Shota
Uji-shi, Kyoto 611-0021 (JP)
• NAKAI, Miho
Uji-shi, Kyoto 611-0021 (JP)
• KAMIKAWA, Hiroo
Uji-shi, Kyoto 611-0021 (JP)

(74) Representative: Vossius & Partner
Patentanwälte Rechtsanwälte mbB
Siebertstraße 3
81675 München (DE)

(54) **POLYAMIDE RESIN COMPOSITION AND MOLDED ARTICLE COMPRISING SAME**

(57) The present invention provides a resin composition capable of giving a molded body having a metallic color tone and excellent in surface hardness, surface glossiness, mechanical properties, and flow mark reducing property. The present invention relates to a polyamide resin composition comprising 100 parts by mass of a polyamide (A), 0.1 to 50 parts by mass of a cellulose fiber (B) having an average fiber diameter of 10 μm or less and 0.1 to 12 parts by mass of a metallic pigment (C).

EP 4 053 187 A1

**Description**

TECHNICAL FIELD

The present invention relates to a polyamide resin composition and a molded body comprising the same.

BACKGROUND ART

An engine cover of an automobile or an interior or exterior cover for a household electric appliance is generally formed of a thermoplastic resin such as a polyamide resin. The appearance of such resin molded products may be required to have a metallic color tone such as that of steel or an aluminum alloy. Particularly in recent years, there has been an increasing demand for the aesthetic appearance of the resin molded product, and the appearance of the resin molded product is required not only to have a metallic color tone but also to have a glossy feeling. In addition, various types of metallic color tones are required, from silver-gray to slightly whitish gray-white. In order to satisfy such a requirement, a method of coating a paint containing a metal powder such as aluminum on the surface of a resin molded product, so-called metallic coating, has been conventionally performed. However, as the metallic coating contains an organic solvent, a problem in terms of working environment arises. There has been also such a problem as poor productivity, resulting in high costs.

CITATIONS LIST

PATENT LITERATURES

Patent Literature 1: WO 99/13006 A
Patent Literature 2: WO 2016/148109 A

SUMMARY OF INVENTION

PROBLEMS TO BE SOLVED BY THE INVENTION

The inventors of the present invention have found that the following problems occur.
As a polyamide having a metallic tone, for example, Patent Literatures 1 and 2 disclose a resin composition containing a polyamide, a layered silicate, and a metallic pigment. However, a molded product comprising the resin composition of Patent Literatures 1 and 2 can achieve a metallic color tone, but has had such a problem that the molded product is scratched during use because of its soft surface, resulting in deterioration in appearance in some cases. Furthermore, a molded body obtained from a conventional resin composition having a metallic tone sometimes has caused a problem in mechanical properties and/or flow mark reducing property.
The present invention solves the above problems, and an object of the present invention is to provide a resin composition capable of giving a molded body having a metallic color tone and excellent in surface hardness and surface glossiness.
The present invention also solves the above problems, and an object of the present invention is to provide a resin composition capable of giving a molded body having a metallic color tone and excellent in surface hardness, surface glossiness, mechanical properties, and flow mark reducing property.

MEANS FOR SOLVING PROBLEMS

As a result of intensive studies to solve the above problems, the present inventors have found that the above object is achieved by further including a specific cellulose fiber in a resin composition containing a polyamide and a metallic pigment, and have reached the present invention.
The gists of the present invention are as follows.

<1> A polyamide resin composition comprising:

100 parts by mass of a polyamide (A);
0.1 to 50 parts by mass of a cellulose fiber (B) having an average fiber diameter of 10 $\mu$m or less; and
0.1 to 12 parts by mass of a metallic pigment (C).

<2> The polyamide resin composition according to <1>, wherein a molded body obtained from the polyamide resin composition has a pencil hardness of B or more as measured in accordance with JIS K5600-5-4.

<3> The polyamide resin composition according to <1> or <2>, wherein after a 5 μm particle polishing film is brought into contact with a molded body obtained from the polyamide resin composition under a vertical overload of 9 N and is rubbed back and forth 10 times, the molded body has a residual ratio of surface glossiness of 75% or more based on JIS Z8741.

<4> The polyamide resin composition according to any one of <1> to <3>, wherein a molded body obtained from the polyamide resin composition has a flop index of 6 or more based on multiangle colorimetry.

<5> The polyamide resin composition according to any one of <1> to <4>, wherein a molded body obtained from the polyamide resin composition has a surface glossiness of 85 or more based on JIS Z8741.

<6> The polyamide resin composition according to any one of <1> to <5>, wherein a molded body obtained from the polyamide resin composition has a flexural strength of 100 MPa or more, based on a three-point support bending method in accordance with ISO 178.

<7> The polyamide resin composition according to any one of <1> to <6>, wherein a molded body obtained from the polyamide resin composition has a flexural modulus of 2.5 GPa or more, based on a three-point support bending method in accordance with ISO 178.

<8> The polyamide resin composition according to any one of <1> to <7>, wherein

a content of the cellulose fiber (B) is from 1 to 8 parts by mass with respect to 100 parts by mass of the polyamide (A), and

a content of the metallic pigment (C) is from 0.3 to 8 parts by mass with respect to 100 parts by mass of the polyamide (A).

<9> The polyamide resin composition according to any one of <1> to <8>, wherein

the polyamide (A) is polyamide 6,

the cellulose fiber (B) has an average fiber diameter of 20 to 100 nm,

a content of the cellulose fiber (B) is from 1 to 4 parts by mass with respect to 100 parts by mass of the polyamide (A), and

a content of the metallic pigment (C) is from 0.6 to 3 parts by mass with respect to 100 parts by mass of the polyamide (A).

<10> The polyamide resin composition according to any one of <1> to <9>, wherein the metallic pigment (C) is one or more kinds of metallic pigments selected from a group consisting of aluminum, iron, nickel, chromium, tin, zinc, indium, titanium, silicon, and copper; alloys thereof; and oxides, nitrides, sulfides and carbides of these metals or alloys; and mica coated with titanium or an oxide thereof.

<11> A method for producing the polyamide resin composition according to any one of <1> to <10>, the method comprising:

adding a cellulose fiber at a time of polymerization of the polyamide (A).

<12> A molded body obtained by molding the polyamide resin composition according to any one of <1> to <10>.

EFFECTS OF THE INVENTION

According to the present invention, it is possible to provide a resin composition capable of giving a molded body having a metallic color tone and excellent in surface hardness and surface glossiness.

According to the present invention, it is possible to provide a resin composition capable of giving a molded body having a metallic color tone and excellent in surface hardness, surface glossiness, mechanical properties, and flow mark reducing property.

MODES FOR CARRYING OUT THE INVENTION

[Polyamide Resin Composition]

The polyamide resin composition of the present invention contains a polyamide (A), a cellulose fiber (B), and a metallic pigment (C).

The polyamide (A) used in the present invention is a polymer having an amide bond formed from an amino acid, a lactam, or a diamine and a dicarboxylic acid.

Examples of the amino acid include 6-aminocaproic acid, 11-aminoundecanoic acid, 12-aminododecanoic acid, and para-aminomethylbenzoic acid.

Examples of the lactam include ε-caprolactam and ω-laurolactam.

Examples of the diamine include tetramethylenediamine, hexamethylenediamine, nonamethylenediamine, decamethylenediamine, undecamethylenediamine, dodecamethylenediamine, 2,2,4-/2,4,4-trimethylhexamethylenediamine, 5-methylnonamethylenediamine, 2,4-dimethyloctamethylenediamine, meta-xylylenediamine, para-xylylenediamine, 1,3-bis(aminomethyl)cyclohexane, 1-amino-3-aminomethyl-3,5,5-trimethylcyclohexane, 3,8-bis(aminomethyl)tricyclodecane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine.

Examples of the dicarboxylic acid include adipic acid, suberic acid, azelaic acid, sebacic acid, dodecanedioic acid, terephthalic acid, isophthalic acid, naphthalenedicarboxylic acid, 2-chloroterephthalic acid, 2-methylterephthalic acid, 5-methylisophthalic acid, 5-sodium sulfoisophthalic acid, hexahydroterephthalic acid, hexahydroisophthalic acid, and diglycolic acid.

Specific examples of the polyamide (A) used in the present invention include polycaproamide (polyamide 6), polytetramethylene adipamide (polyamide 46), polyhexamethylene adipamide (polyamide 66), polyhexamethylene sebacamide (polyamide 610), polyhexamethylene undecamide (polyamide 611), polyhexamethylene dodecamide (polyamide 612), polyundecamethylene adipamide (polyamide 116), polydodecamethylene adipamide (polyamide 126), polydodecamethylene sebacamide (polyamide 1210), polydodecamethylene dodecamide (polyamide 1212), polyundecanamide (polyamide 11), polydodecanamide (polyamide 12), polytrimethylhexamethylene terephthalamide (polyamide TMHT), polyhexamethylene terephthalamide (polyamide 6T), polyhexamethylene isophthalamide (polyamide 6I), pol-yhexamethylene terephthal/isophthalamide (polyamide 6T/6I), polyhexamethylene hexahydroterephthalamide (polyamide 6T (H)), polybis(4-aminocyclohexyl)methane dodecamide (polyamide PACM12), polybis (3-methyl-4-aminocyclohexyl)methane dodecamide (polyamidedimethyl PACM12), polymethaxylylene adipamide (polyamide MXD6), polynonamethylene terephthalamide (polyamide 9T), polynonamethylene hexahydroterephthalamide (polyamide 9T(H)), polydecamethylene terephthalamide (polyamide 10T), polydecamethylene decamide (polyamide 1010), polydecamethylene dodecamide (polyamide 1012), polyundecamethylene terephthalamide (polyamide 11T), and polyundecamethylene hexahydroterephthalamide (polyamide 11T(H)). A copolymer of two or more monomers constituting these polymers or a mixture of two or more polymers selected from these polymers may be used. Among them, from the viewpoint of further improving the metallic color tone, surface hardness, surface glossiness, mechanical properties, and flow mark reducing property of a molded body, one or more polyamides selected from the group consisting of polyamide 6, polyamide 66, polyamide 11, polyamide 12, copolymers thereof, and mixtures thereof are preferable, one or more polyamides selected from the group consisting of polyamide 6, polyamide 66, copolymers thereof, and mixtures thereof are more preferable, and polyamide 6 is still more preferable.

A metallic color tone herein is a metallic color expressed on a surface of a molded body. Specifically, the higher the flop index, the better the metallic color tone.

The surface glossiness is a characteristic value related to a glossy feeling of the surface of the molded body. A higher surface glossiness indicates a better glossy feeling. The surface glossiness refers to a surface glossiness before abrasion test, unless otherwise specified.

The surface hardness is a characteristic related to the hardness of the surface of the molded body, and in the present invention, the surface hardness can be evaluated by pencil hardness and gloss residual ratio. The surface hardness is a characteristic that can be said to be excellent only after both the pencil hardness and the gloss residual ratio exhibit excellent values.

The pencil hardness is one of the characteristic values indicating the hardness of the surface of the molded body, and is specifically a characteristic value based on scratch hardness by a pencil method.

The gloss residual ratio is one of the characteristic values indicating the hardness of the surface of the molded body, and specifically, is a characteristic value indicating that the surface glossiness of the molded body can be maintained even by scratches (e.g., abrasion test). The gloss residual ratio is represented by a residual ratio of surface glossiness before and after scratching.

The mechanical properties are properties related to the mechanical strength (e.g., bending strength and flexural modulus) of a molded body.

The flow mark reducing property is a property in which the generation of a flow mark that causes color unevenness of the metallic color tone on the surface of the molded body is reduced. The flow mark is a streak-like flow mark generated due to the flow of the melt while solidifying in the mold during molding, and is often generated in the vicinity of the gate during injection molding, for example.

The molecular weight of the polyamide (A) is not particularly limited, and may be, for example, a molecular weight that achieves a relative viscosity described later.

The relative viscosity of the polyamide (A) is preferably from 1.5 to 5.0, and more preferably from 1.7 to 4.0 when measured at a temperature of 25°C and a concentration of 1 g/100 mL using 96% sulfuric acid as a solvent, from the viewpoint of further improving the metallic color tone, surface hardness, surface glossiness, mechanical properties

and flow mark reducing property of the molded body. When cellulose fibers are dispersed in the polyamide resin in advance as described later, the relative viscosity of the polyamide resin in which the cellulose fibers are dispersed is preferably within the above range.

The polyamide (A) can be produced by a known polycondensation method or a method using a solid phase polymerization method in combination.

In the present invention, the cellulose fiber (B) is a cellulose fiber having a specific average fiber diameter to be described later. When the resin composition of the present invention contains the cellulose fiber (B) together with the metallic pigment to be described later, not only the mechanical properties are improved, but also the surface hardness and the flow mark reducing property are improved. When the resin composition contains only the cellulose fiber (B), a sufficient metallic color tone cannot be obtained. In addition, when the resin composition contains only the metallic pigment (C), sufficient surface hardness and flow mark reducing property cannot be obtained.

Examples of the cellulose fiber (B) used in the present invention include those derived from plants such as wood, rice, cotton, kenaf, bagasse, abaca, and hemp, those derived from organisms such as bacterial cellulose, baronia cellulose, and ascidian cellulose, regenerated cellulose, and cellulose derivatives.

By containing the cellulose fiber (B), the resin composition of the present invention can improve the mechanical properties and flow mark reducing property of the obtained molded body, and can also increase the surface hardness. In order to sufficiently improve the mechanical properties, the flow mark reducing property, and the surface hardness, the cellulose fibers are preferably uniformly dispersed in the resin without aggregating. The cellulose fibers are more easily dispersed as the number of hydroxyl groups on the surface of the cellulose fiber in contact with the polyamide is larger, and therefore the cellulose fiber preferably has a large surface area. Therefore, the cellulose fiber (B) is preferably made as fine as possible. The cellulose fiber used for this purpose is not particularly limited as long as the cellulose fibers can be finally uniformly dispersed in the resin composition, and is either chemically unmodified or chemically modified. When other fibers (e.g., swelling fluoromica, etc.) are used instead of the cellulose fiber, the surface hardness decreases.

The average fiber diameter of the cellulose fiber (B) in the resin composition of the present invention is required to be 10 $\mu$m or less, and is preferably 1 $\mu$m or less, more preferably 500 nm or less, still more preferably 400 nm or less (particularly from 1 to 400 nm), sufficiently preferably from 5 to 100 nm, particularly preferably from 20 to 100 nm, and most preferably from 20 to 80 nm, from the viewpoint of further improving the metallic color tone, surface hardness, surface glossiness, and mechanical properties of the molded body. When the average fiber diameter exceeds 10 $\mu$m, the surface area of the cellulose fiber is reduced, it becomes difficult to improve dispersibility and affinity for the polyamide resin or polyamide forming monomers, and thus, the dispersibility of the cellulose fiber is reduced, so that the effect of improving the surface hardness and mechanical properties of the obtained molded body is small, which is not preferable. On the other hand, the lower limit of the average fiber diameter is preferably 4 nm or more in consideration of productivity of the cellulose fiber. In an embodiment in which cellulose fibers are added during polymerization of the polyamide (A) as described later, the average fiber diameter of the cellulose fiber after melt polymerization of the polyamide (A) or when the polyamide (A) is formed into a molded body tends to be smaller than that of the used cellulose fiber because a shearing force is applied to the cellulose fiber by the melt polymerization or the molding. In order to set the average fiber diameter of the cellulose fiber (B) in the molded body to 10 $\mu$m or less, a cellulose fiber having an average fiber diameter of 10 $\mu$m or less may be used.

The average fiber length of the cellulose fiber (B) in the resin composition of the present invention is required to be 0.2 $\mu$m or more, and is preferably 0.5 $\mu$m or more, more preferably 0.8 $\mu$m or more from the viewpoint of further improving the metallic color tone, surface hardness, surface glossiness, and mechanical properties of the molded body. The upper limit of the average fiber length of the cellulose fiber (B) is not particularly limited, and the average fiber length is usually 100 $\mu$m or less, and is preferably 50 $\mu$m or less, more preferably 30 $\mu$m or less, and still more preferably 10 $\mu$m or less from the viewpoint of further improving the metallic color tone, surface hardness, surface glossiness, and mechanical properties of the molded body. In an embodiment in which cellulose fibers are added during polymerization of the polyamide (A) as described later, the average fiber length of the cellulose fiber after melt polymerization of the polyamide (A) or when the polyamide (A) is formed into a molded body tends to be smaller than that of the used cellulose fiber because a shearing force is applied to the cellulose fiber by the melt polymerization or the molding. In order to set the average fiber length of the cellulose fiber (B) in the molded body to 0.2 $\mu$m or more, a cellulose fiber having an average fiber length of 0.2 $\mu$m or more may be used.

The average fiber diameter and the average fiber length of the cellulose fiber (B) in the resin composition used herein are the average fiber diameter and the average fiber length thereof in a molded body obtained using the resin composition. Specifically, the average fiber diameter and the average fiber length of a multipurpose test specimen A type described in ISO standard 3167 obtained by injection molding a sufficiently dried resin composition using an injection molding machine (NEX110-12E made by NISSEI PLASTIC INDUSTRIAL, CO., LTD.) are used. The detailed molding conditions at this time are as follows. The average fiber diameter of the cellulose fiber (B) in the resin composition is almost the same as the average fiber diameter and the average fiber length in the molded body obtained using the resin composition. Conditions for the injection molding are set to a resin temperature of 250°C, a mold temperature of 70°C, a holding pressure of 30 to 100 MPa, an injection speed of 10 to 150 mm/s, and a cooling time of 20 seconds.

In order to set the average fiber diameter of the cellulose fiber to 10 μm or less, a cellulose fiber having an average fiber diameter of 10 μm or less is preferably used as the cellulose fiber to be blended in the polyamide resin. The cellulose fiber (B) having an average fiber diameter of 10 μm or less can be obtained by splitting cellulose fiber into microfibrillated cellulose fiber. As means for microfibrillation, various pulverizing apparatuses such as a ball mill, a stone mill pulverizer, a high-pressure homogenizer, and a mixer can be used. As a commercially available product of an aqueous dispersion of the microfibrillated cellulose fibers, for example, "Celish" made by Daicel FineChem Ltd., and "nanoforest" made by Chuetsu Pulp & Paper Co., Ltd. can be used.

As the cellulose fiber (B) having an average fiber diameter of 10 μm or less, micronized cellulose can also be used. The micronized cellulose can be produced, for example, by oxidizing cellulose fiber in an aqueous solution containing an N-oxyl compound, a co-oxidant, and an alkali metal bromide, followed by washing with water and defibration. Examples of the N-oxyl compound include 2,2,6,6-tetramethylpiperidine-1-oxyl radical, and examples of the co-oxidant include sodium hypochlorite and sodium chlorite. An alkaline compound such as an aqueous sodium hydroxide solution is added to adjust the pH to around 10, and the reaction is continued until the change of the pH is not found. The reaction temperature is preferably room temperature. After the reaction, the N-oxyl compound, the co-oxidant, and the alkali metal bromide remaining in the system are preferably removed. Examples of the method of washing with water include the methods using filtration or centrifugation. Examples of the defibration method include the methods using various pulverizers mentioned for the microfibrillation.

As the cellulose fiber (B) having an average fiber diameter of 10 μm or less, cellulose fiber aggregates sorted as waste threads in production steps of fiber products using cellulose fiber can also be used. Examples of the production steps of fiber products include steps of spinning, weaving fabric, producing nonwoven fabric, and processing of fiber products. These cellulose fiber aggregates are obtained as waste threads after cellulose fiber undergoes these steps, and hence are formed of cellulose fiber made fine.

As the cellulose fiber (B) having an average fiber diameter of 10 μm or less, bacterial cellulose produced by bacteria can also be used. Examples of the bacterial cellulose include a bacterial cellulose produced by acetic acid bacteria of the genus Acetobacter as producing bacteria. Plant cellulose is formed through bundling of cellulose molecular chains and is formed through bundling of very fine microfibrils. On the other hand, the cellulose produced by acetic acid bacteria originally has a ribbon shape with a width of 20 to 50 nm and forms an extremely fine network shape as compared to plant cellulose. The bacterial cellulose may coexist with acetic acid because bacteria produce acetic acid together with the cellulose. In that case, it is preferable to use a solvent substituted with water.

The cellulose fiber may be an unmodified cellulose fiber in which a hydroxyl group derived from cellulose is not modified with any substituent, or may be a modified cellulose fiber in which a hydroxyl group (particularly a part thereof) derived from cellulose is modified (or substituted). The substituent to be introduced into the hydroxyl group derived from cellulose is not particularly limited, and examples thereof include a hydrophilic substituent and a hydrophobic substituent. In the modified cellulose fiber, the hydroxyl group to be modified (or substituted) with a substituent is a part of the hydroxyl group derived from cellulose, and the degree of substitution is, for example, preferably from 0.05 to 2.0, more preferably from 0.1 to 1.0, and still more preferably from 0.1 to 0.8. The degree of substitution refers to the number of substituents introduced per unit structure (glucopyranose ring) that constitutes cellulose. In other words, the degree of substitution is defined as "a value obtained by dividing the number of moles of introduced substituents by the total number of moles of the glucopyranose rings". Since pure cellulose has three substitutable hydroxyl groups per unit structure (glucopyranose ring), a theoretical maximum value of the degree of substitution of the cellulose fiber of the present invention is 3, and a theoretical minimum value thereof is 0. Examples of the hydrophilic substituent include a carboxyl group, a carboxymethyl group, and a phosphate ester group. Examples of the hydrophobic substituent include a silyl ether group, an alkyl ether group, and an alkyl ester group.

From the viewpoint of further improving the metallic color tone, surface hardness, surface glossiness, mechanical properties, and flow mark reducing property of the molded body, the cellulose fiber (B) is preferably an unmodified cellulose fiber, a cellulose fiber modified with a hydrophilic substituent, or a mixed fiber thereof, and more preferably an unmodified cellulose fiber.

The aspect ratio (average fiber length/average fiber diameter) of the cellulose fiber (B) in the molded body of the present invention is preferably 10 or more, more preferably 20 or more, even more preferably 30 or more, and still more preferably 50 or more. The aspect ratio of 10 or more allows the obtained molded body to be further improved in the mechanical properties thereof. The upper limit value of the aspect ratio of the cellulose fiber (B) is not particularly limited, and the aspect ratio is usually 200 or less, and particularly 100 or less.

A content of the cellulose fiber (B) in the polyamide resin composition of the present invention is required to be from 0.1 to 50 parts by mass with respect to 100 parts by mass of the polyamide (A), and is preferably from 0.5 to 20 parts by mass, more preferably from 1 to 12 parts by mass, still more preferably from 1 to 10 parts by mass, particularly preferably from 1 to 8 parts by mass, and most preferably from 1 to 4 parts by mass, from the viewpoint of further improving the metallic color tone, surface hardness, surface glossiness, mechanical properties, and flow mark reducing property of the molded body. When the content of the cellulose fiber is less than 0.1 parts by mass with respect to 100 parts by mass of the polyamide (A), the effect of improving the surface hardness, flow mark reducing property, and mechanical properties of the obtained molded body is small, which is not preferable. On the other hand, when the content of the cellulose fiber (B) exceeds 50 parts by mass with respect to 100 parts by mass of the polyamide (A), it may be difficult to include the cellulose fiber (B) in the resin composition, the fluidity of the molten resin may become worse, resulting in deterioration of moldability of the resin composition, or the cellulose fiber may float on the resin surface to deteriorate the surface appearance.

The polyamide resin composition of the present invention is required to include the metallic pigment (C) from the viewpoint of the metallic color tone. The metallic pigment (C) may be metallic particles. In production of the polyamide resin composition of the present invention, the metallic pigment (C) may be used in the form of metallic particles alone, or may be used in the form of a paste or a dispersion liquid containing metallic particles and a dispersion medium. When the metallic pigment (C) is used in the form of a paste or a dispersion liquid, a dispersion medium has usually been removed in the polyamide resin composition by heating and kneading in the production process. The dispersion medium is not particularly limited as long as it is a solvent capable of flowing or dispersing the metallic particles, and may be, for example, a polyalkylene glycol such as polyethylene glycol or polypropylene glycol.

The metallic pigment (C) used in the present invention is not particularly limited as long as the effects of the present invention are not impaired. Examples of the metallic pigment (C) include aluminum, iron, nickel, chromium, tin, zinc, indium, titanium, silicon, and copper; alloys thereof; and oxides, nitrides, sulfides and carbides of these metals or alloys. In addition, mica coated with titanium or an oxide thereof (e.g., pearl mica) can also be used. Among them, a metallic pigment selected from the group consisting of aluminum, iron, oxides thereof, and mica coated with titanium or an oxide thereof is preferable because the effect of improving the metallic color tone of the polyamide resin composition is excellent. The metallic pigment (C) may be used alone or in combination of two or more thereof. The metallic pigment (C) is preferably one or more selected from the group consisting of aluminum and mica coated with titanium or an oxide thereof from the viewpoint of further improving the metallic color tone, surface hardness, surface glossiness, mechanical properties, and flow mark reducing property of the molded body.

The shape of the metallic pigment (C) is not particularly limited, and may be, for example, a granular shape, a plate shape, or the like. Among them, a plate shape is preferable from the viewpoint of metallic properties. In the metallic pigment (C), the plate shape is a flake shape or a flat plate shape. In the metallic pigment (C), the granular shape may have a grain-like shape as a whole, and may be, for example, a substantially spherical shape, a substantially ellipsoidal shape, a substantially cubic shape, a substantially rectangular parallelepiped shape, or a composite shape thereof.

The average particle size of the metallic pigment (C) is preferably from 1 to 100 $\mu$m, more preferably from 2 to 80 $\mu$m, still more preferably from 3 to 60 $\mu$m, and particularly preferably from 4 to 40 $\mu$m, from the viewpoint of further improving the metallic color tone, surface hardness, surface glossiness, mechanical properties, and flow mark reducing property of the molded body. When the average particle size is less than 1 $\mu$m, it is difficult to obtain the metallic pigment (C) itself, and even if such metallic pigment (C) is obtained, the effect of improving the metallic color tone is small. On the other hand, when the average particle size of the metallic pigment (C) exceeds 100 $\mu$m, handling in obtaining the polyamide resin composition becomes difficult, which makes it difficult to perform melt mixing while maintaining the average particle size of the metallic pigment (C) as a raw material. In addition, even if melt-mixing can be performed, the obtained molded body of the polyamide resin composition has a high metallic color tone but tends to be poor in designability.

The average particle size of the metallic pigment (C) is the average value of the maximum diameter (or maximum length) when they are granular, and is the average value of the maximum length on the maximum surface when they are plate-shaped.

The average particle size of the metallic pigment (C) is an average value of the maximum lengths, and is an average value of any 100 particles measured by a laser diffraction/scattering type particle size distribution measuring device, for example, Microtrac 2 (made by Nikkiso Co., Ltd.).

When the metallic pigment (C) has a plate shape, the average thickness thereof is preferably from 20 nm to 30 $\mu$m, more preferably from 30 nm to 20 $\mu$m, still more preferably from 30 nm to 10 $\mu$m, and particularly preferably from 100 nm to 500 nm. The metallic pigment (C) having an average thickness of less than 20 nm has poor rigidity, and when melted and mixed, it becomes difficult to maintain its shape, thus making it difficult to obtain a molded body having a sufficient metallic color tone. On the other hand, the orientation of the metallic pigment (C) having an average thickness exceeding 30 $\mu$m is degraded, resulting in poor metallic color tone of the obtained molded body. The average thickness of the metallic pigment (C) can be calculated by a simple average of 50 metallic pigments measured with an electron microscope.

When the metallic pigment (C) has a plate shape, the aspect ratio thereof is preferably from 2 to 2000, more preferably from 2 to 1000, and still more preferably from 2 to 500. When the aspect ratio is less than 2, the metallic color tone of the obtained molded body is poor. A metallic pigment having an aspect ratio exceeding 2000 is difficult to be industrially obtained, and even if obtained, the metallic pigment has poor dispersion stability, and the surface smoothness of the obtained molded body is impaired. The aspect ratio of the metallic pigment (C) can be determined by dividing the value of the average particle size by the average thickness value.

A content of the metallic pigment (C) in the polyamide resin composition of the present invention is required to be from 0.1 to 12 parts by mass (particularly from 0.1 to 10 parts by mass) with respect to 100 parts by mass of the polyamide (A), and is preferably from 0.3 to 8 parts by mass, more preferably from 0.5 to 6 parts by mass, and still more preferably from 0.6 to 3 parts by mass, from the viewpoint of further improving the metallic color tone, the surface hardness, the surface glossiness, the mechanical properties, and the flow mark reducing property. When the content of the metallic pigment (C) is less than 0.1 parts by mass, the obtained molded body has an insufficient metallic color tone, which is not preferable. On the other hand, when the content exceeds 12 parts by mass, the obtained molded body has a flow mark to impair the designability, which is not preferable. When the metallic pigment (C) is used in the form of a paste or a dispersion liquid as described above, the content of the metallic pigment (C) is a value converted into the content of the solid content (metallic particles) of the metallic pigment (C) alone.

The polyamide resin composition of the present invention may contain additives such as a layered silicate, a filler, an ultraviolet absorber, a light stabilizer, a heat stabilizer, an antioxidant, a release agent, a lubricant, an antistatic agent, and a crystal nucleating agent as long as the effects of the present invention are not impaired.

[Method for Producing Polyamide Resin Composition]

A method for producing the polyamide resin composition of the present invention is not particularly limited, and for example, the polyamide resin composition can be produced by adding cellulose fibers at the time of polymerization of the polyamide (A). In the method for producing the polyamide resin composition of the present invention, specifically, a monomer constituting a polyamide and an aqueous dispersion of cellulose fibers are mixed, a catalyst is added thereto as necessary, and the mixture is subjected to polymerization (e.g., melt polymerization) to prepare a polyamide containing cellulose fibers (hereinafter, abbreviated as "polyamide X") (polymerization step). Thereafter, the polyamide X and the metallic pigment (C) are melt-kneaded (melt-kneading step), so that a polyamide resin composition can be produced. The resin composition may have a so-called pellet form. The time of polymerization of the polyamide (A) includes not only a time of polymerization using a monomer constituting the polyamide (A) but also a time of polymerization using a prepolymer capable of constituting the polyamide.

(Polymerization Step)

The polyamide X can be obtained, for example, by stirring a mixture of a monomer or a prepolymer constituting the polyamide (A) and an aqueous dispersion of cellulose fibers with a mixer or the like to form a uniform dispersion, and heating the liquid mixture to 150 to 270°C, to melt-polymerize the heated mixture while evaporating water. The aqueous dispersion of cellulose fibers used for melt polymerization can be obtained by stirring purified water and cellulose fibers with a mixer or the like. A solid content in the aqueous dispersion of cellulose fibers is preferably from 0.01 to 50% by mass.

In order to enhance polymerization efficiency, a polymerization catalyst may be used. The polymerization catalyst may be added in any step before melt polymerization, during melt polymerization, before scouring, during scouring, or after scouring, and is preferably added before melt polymerization. The polymerization catalyst is not particularly limited as long as it is usually used for melt polymerization of polyamide. In the polymerization of the polyamide resin, a catalyst such as phosphoric acid or phosphorous acid may be added as necessary.

When bacterial cellulose is used as the cellulose fiber, a solution obtained by immersing bacterial cellulose in purified water for solvent substitution may be used as the aqueous dispersion of cellulose fibers. When bacterial cellulose subjected to solvent substitution is used, it is preferable that bacterial cellulose adjusted to a predetermined concentration after the solvent substitution is mixed with a monomer constituting the polyamide resin to promote a polymerization reaction in the same manner as described above.

In the above method, since cellulose fibers having an average fiber diameter of 10 μm or less are subjected to a polymerization reaction in the form of an aqueous dispersion, the cellulose fibers can be subjected to a polymerization reaction with good dispersibility. Furthermore, the cellulose fibers subjected to the polymerization reaction improves dispersibility by interaction with a monomer or water during the polymerization reaction or by stirring under the above-described temperature conditions, so that a resin composition in which cellulose fibers having a small average fiber diameter are well dispersed without aggregating the fibers can be obtained. According to the above method, cellulose fibers contained in the resin composition after completion of the polymerization reaction may have a smaller average fiber diameter than that of cellulose fibers added before the polymerization reaction.

By such a production method, the cellulose fibers can be uniformly dispersed with a relatively small average fiber diameter in the polyamide resin without being aggregated. The monomer polymerized in the presence of the cellulose fiber may be a prepolymer. Here, the prepolymer is an intermediate product in the course of polymerization of a monomer.

An additive that may be added to the resin composition may be added during the polymerization reaction (e.g., before the polymerization reaction, during the polymerization reaction, or after the polymerization reaction).

In the above method, a step of drying cellulose fibers is not required, and production can be performed without passing through a step in which scattering of fine cellulose fibers is caused, so that a polyamide resin or a polyamide resin composition can be obtained with good operability. In addition, it is not necessary to replace water with an organic solvent for the purpose of uniformly dispersing the monomer and the cellulose fibers, so that it is possible to achieve excellent handling and to suppress discharge of chemical substances during the production steps.

After completion of the melt polymerization, the obtained polyamide X is preferably discharged and then cut into pellets. The size of the pellet is not particularly limited, and is preferably from 2 to 5 mm in diameter and from 3 to 6 mm in length, and more preferably from 3 to 4 mm in diameter and from 4 to 5 mm in length from the viewpoint of handling and the efficiency of scouring to be described later.

The polyamide X is preferably immersed in water at 90 to 100°C to be scoured in order to remove unreacted monomers and oligomers.

The polyamide X after the melt polymerization or the polyamide X after the scouring as necessary may be subjected to solid phase polymerization by heating for 30 minutes or more at a temperature lower than a melting point of the polyamide X in an inert gas flow or under reduced pressure in order to further increase the degree of polymerization. When the heating temperature is lower than "the melting point of the polyamide X - 75°C", the reaction speed may become slow, and in the vicinity of the melting point of the polyamide X, the polyamide may be fused or colored.

(Melt-Kneading Step)

The polyamide X and the metallic pigment (C) can be melt-kneaded by using a known melt-kneading extruder. As a method of feeding the metallic pigment (C) into the melt-kneading extruder, a mixture of the metallic pigment (C) and the polyamide X may be collectively charged from a main hopper. However, in order to suppress crushing or breakage of the metallic pigment (C) as much as possible, the metallic pigment (C) is preferably fed by a side feeder from the middle of the extruder, and more preferably fed downstream of the extruder as much as possible.

The polyamide X and the metallic pigment (C) may not be sufficiently melt-kneaded, and in a subsequent molding processing (e.g., injection molding processing), they may be mixed within a range that does not interfere with work. If necessary, a dry blend of the polyamide X and the metallic pigment (C) may be directly fed into an injection molding machine, or the polyamide X and the metallic pigment (C) may be first mixed and then melt-kneaded in an injection molding machine to perform injection molding.

Since the metallic pigment (C) is brittle against external stress, it is preferable not to apply screw shearing stress during melt-kneading to the metallic pigment (C) as much as possible in the production of a resin composition or the molding of a molded body in order to improve the metallic color tone of the obtained molded body.

The polyamide resin composition of the present invention can give a molded body having a metallic color tone and excellent in surface hardness, surface glossiness, mechanical properties, and flow mark reducing property.

For example, the molded body obtained from the polyamide resin composition of the present invention has a flop index of 6 or more, preferably 10 or more, and more preferably 13 or more, based on multiangle colorimetry ($L^*$ at an incident angle of 45° and reflection viewing angles of 15°, 45° and 110°). The upper limit value of the flop index is not particularly limited, and the flop index is usually 30 or less, and particularly 20 or less. The molded body for measuring the flop index is a plate-shaped injection-molded body of 90 mm in length × 50 mm in width × 2 mm in thickness manufactured under the following injection conditions.

Injection conditions:

cylinder temperature 250°C;
mold temperature 70°C;
holding pressure 30 to 100 MPa;
injection speed 10 to 150 mm/s;
injection time 11 seconds; and
cooling time 20 seconds.

For example, the molded body obtained from the polyamide resin composition of the present invention has a surface glossiness (surface glossiness before abrasion test) of 85 or more, preferably 87 or more, and more preferably 89 or more, based on JIS Z8741 (incident angle: 60°). The upper limit value of the surface glossiness is not particularly limited, and the surface glossiness is usually 100 or less, and particularly 95 or less. The molded body for measuring the surface glossiness is a molded body similar to the molded body for measuring the flop index described above.

For example, after a 5 μm particle polishing film is brought into contact with the molded body obtained from the polyamide resin composition of the present invention under a vertical overload of 9 N and is rubbed back and forth 10 times, the molded body has a residual ratio of surface glossiness (that is, gloss residual ratio) of 75% or more, preferably 80% or more, and more preferably 85% or more, based on JIS Z8741 (incident angle: 60°). The upper limit value of the residual ratio of the surface glossiness is not particularly limited, and the residual ratio of the surface glossiness is usually 95% or less, and particularly 90% or less. The molded body for measuring the residual ratio of the surface glossiness is a molded body similar to the molded body for measuring the flop index described above.

For example, the molded body obtained from the polyamide resin composition of the present invention has a pencil hardness of B or more as measured in accordance with JIS K5600-5-4. The upper limit value of the pencil hardness is not particularly limited, and the pencil hardness is usually 2H or less, and particularly H or less. The molded body for measuring the pencil hardness is a molded body similar to the molded body for measuring the flop index described above.

For example, the molded body obtained from the polyamide resin composition of the present invention has a flexural strength of 100 MPa or more, preferably 110 MPa or more, and more preferably 120 MPa or more, based on a three-point support bending method (distance between supporting points: 64 mm, test speed: 2 mm/min, test atmosphere: 23°C, 50% RH, absolute dry condition) in accordance with ISO 178. The upper limit value of the flexural strength is not particularly limited, and the flexural strength is usually 300 MPa or less, and particularly 250 MPa or less. The molded body for measuring the flexural strength is a multipurpose test specimen A type based on ISO standard 3167.

For example, the molded body obtained from the polyamide resin composition of the present invention has a flexural modulus of 2.5 GPa or more, preferably 2.8 GPa or more, and more preferably 3.0 GPa or more, based on a three-point support bending method (distance between supporting points: 64 mm, test speed: 2 mm/min, test atmosphere: 23°C, 50% RH, absolute dry condition) in accordance with ISO 178. The upper limit value of the flexural modulus is not particularly limited, and the flexural modulus is usually 20 GPa or less, and particularly 10 GPa or less. The molded body for measuring the flexural modulus is a multipurpose test specimen A type based on ISO standard 3167.

[Molded Body]

The molded body of the present invention can be obtained by molding the polyamide resin composition of the present invention described above by a known molding method. Examples of the known molding method include injection molding, blow molding, extrusion molding, inflation molding, and vacuum molding, pressure molding, and vacuum pressure molding applied after sheet processing. For example, the polyamide resin composition of the present invention can give a molded body obtained by injection molding; a film or sheet (hereinafter, referred to as a "film or the like") obtained by extrusion molding and a molded body obtained by processing the film or the like or the stretched film or the like; a hollow body obtained by blow molding and a molded body obtained by processing the hollow body; a filament (fiber) obtained by melt spinning and a shaped body obtained by processing the stretched filament via a 3D printer; a shaped body obtained by processing a pellet or a pulverized product via a 3D printer; or the like.

Among the molding methods described above, injection molding is preferable. As the injection molding, in addition to general injection molding, gas injection molding, injection press molding, and the like can also be adopted. The injection molding machine is not particularly limited, and examples thereof include a screw in-line type injection molding machine and a plunger type injection molding machine. A polyamide resin composition heat-melted in a cylinder of the injection molding machine is weighed every shot, injected into a die in a molten state, cooled and solidified in a predetermined shape, and then taken out as a molded body from the die. The resin temperature during injection molding is preferably set to be equal to or higher than the melting point of the polyamide resin composition, particularly polyamide resin, and preferably set to be lower than "the melting point + 100°C". When the polyamide resin composition is heat-melted, the polyamide resin composition to be used is preferably sufficiently dried. A polyamide resin composition having a large water content causes foaming of the resin in the cylinder of the injection molding machine, and accordingly sometimes it is difficult to obtain an optimal molded body. The water content of the resin composition used for injection molding is preferably less than 0.3% by mass, and more preferably less than 0.1% by mass.

As injection molding conditions of the polyamide resin composition of the present invention, for example, the cylinder temperature is set to be equal to or higher than the melting point or flow initiation temperature of the resin composition, preferably from 190 to 270°C, and in addition, the mold temperature is set to be equal to or lower than "the melting point of the resin composition -20°C". If the molding temperature is too low, moldability may become unstable resulting in, for example, short in the molded body, or the surface glossiness of the obtained molded body may be lost. If the molding temperature is too high, the polyamide resin composition may be decomposed, resulting in a decrease in the strength of the obtained molded body or deterioration in surface glossiness.

Since the molded body of the present invention is excellent in surface hardness, surface glossiness, mechanical properties, and flow mark reducing property and has a metallic color tone, it may be applied suitably to various automotive, electric, and electronic parts. Examples of the automotive parts include various instruments such as a speedometer, a tachometer, a fuel gauge, a water temperature gauge, and a distance meter in an instrument panel, various switches and buttons around a car stereo, a navigation system, and an air conditioner, a shift lever on a center console, a hand grip of a side brake, a door trim, an arm rest, and a door lever. Examples of the electric and electronic parts include various parts and housings around personal computers, mobile phone parts and housings, and other OA equipment parts.

EXAMPLES

Hereinafter, the present invention will be specifically described with reference to Examples, but the present invention is not limited to these Examples.

A. Measurement method

(1) Average fiber diameter and average fiber length of cellulose fiber in test piece

A multipurpose test specimen A type described in ISO standard 3167 obtained in "(5) Mechanical properties" described later was used as a test piece.

By using a freeze ultramicrotome, from the test piece, a 100-nm thick section was collected and dyed with $OsO_4$ (osmium tetroxide), and then the section was observed using a transmission electron microscope (JEM-1230 made by JEOL Ltd.). From the electron microscope image, the length in the direction perpendicular to the longitudinal direction of the cellulose fiber (monofilament) and the length in the longitudinal direction thereof were measured. At this time, the maximum length in the perpendicular direction was taken as the fiber diameter. In the same manner, the fiber diameters and fiber lengths of 10 cellulose fibers (monofilaments) were measured and average values calculated from the 10 cellulose fiber diameters and lengths were taken as the average fiber diameter and the average fiber length. In the case where the fiber diameter and average fiber length of the cellulose fiber were large, a 10-$\mu$m thick section was cut out with a microtome, or the test piece was observed as it was using a stereoscopic microscope (OLYMPUS SZ-40), the fiber diameter and the fiber length were measured from the obtained image in the same manner as described above, and the average fiber diameter and the average fiber length were determined.

For a swelling layered silicate, the average fiber diameter and the average fiber length were determined in the same manner.

(2) Flop index (metallic color tone)

A sufficiently dried resin composition was injection-molded using an injection molding machine (NEX110-12E made by NISSEI PLASTIC INDUSTRIAL, CO., LTD.) under the following conditions to give a plate-shaped molded body of 90 mm in length $\times$ 50 mm in width $\times$ 2 mm in thickness. A mold having a film gate at the center in the short-side direction was used.

Injection conditions:

cylinder temperature 250°C;
mold temperature 70°C;
holding pressure 30 to 100 MPa;
injection speed 10 to 150 mm/s;
injection time 11 seconds; and
cooling time 20 seconds.

Using a multiangle colorimeter (a multiangle colorimeter for metallic coating BYK-maci, made by BYK Japan KK), the $L^*$ of the obtained test piece was measured at an incident angle of 45° and reflection viewing angles of 15°, 45°, and 110°, and a flop index was calculated using the following formula. The metallic color tone was evaluated according to the following criteria based on the flop Index.

⊙13 ≤ Flop index (best);
○: 10 ≤ Flop index < 13 (good);
△: 6 ≤ Flop index < 10 (no problem in practical use); and
×: Flop index < 6 (problem in practical use).

[Mathematical Formula 1]

$$\text{Flop index} = \frac{2.69\left(L^*15° - L^*110°\right)^{1.11}}{\left(L^*45°\right)^{0.86}}$$

(3) Surface glossiness (before friction test)

Using the plate-shaped molded body obtained in "(2) Flop index (metallic color tone)", the surface glossiness was measured at an incident angle of 60° using a gloss meter (Gloss meter PG-II M type made by Nippon Denshoku Industries Co., Ltd.) based on JIS Z8741. The surface glossiness was evaluated according to the following criteria.

⊙: 89 ≤ Surface glossiness (best);
○: 87 ≤ Surface glossiness < 89 (good);
△: 85 ≤ Surface glossiness < 87 (no problem in practical use); and
✕: Surface glossiness < 85 (problem in practical use).

(4) Gloss residual ratio (surface glossiness (after friction test))

Using the molded body obtained in "(2) Flop index (metallic color tone)" as an index of scratch resistance, a 5 μm particle polishing film ("#3000" made by 3M Ltd.) was brought into contact with the molded body under a vertical overload of 9 N, and was rubbed back and forth 10 times using a fastness rubbing tester (made by YASUDA SEIKI SEISAKUSHO, LTD.). The surface glossiness of the test surface (that is, the contact surface with the polishing film on the surface of the molded body) before and after the abrasion test was measured at an incident angle of 60° using a gloss meter (Gloss Meter PG-II M made by Nippon Denshoku Industries Co., Ltd.) based on JIS Z8741, and the gloss residual ratio was calculated by the following formula. The higher the scratch resistance, the larger the gloss residual ratio.

[Mathematical Formula 2]

Gloss residual ratio (%) = (surface glossiness after abrasion test/surface glossiness

before abrasion test) × 100

The gloss residual ratio was evaluated according to the following criteria.

⊙: 85 ≤ Gloss residual ratio (best);
○: 80 ≤ Gloss residual ratio < 85 (good);
△: 75 ≤ Gloss residual ratio < 80 (no problem in practical use); and
✕: Gloss residual ratio < 75 (problem in practical use).

(5) Mechanical properties (flexural strength)

A sufficiently dried resin composition was injection-molded using an injection molding machine (NEX110-12E made by NISSEI PLASTIC INDUSTRIAL, CO., LTD.) to give a multipurpose test specimen A type described in ISO standard 3167.
The flexural strength of the obtained multipurpose test specimen was measured by a three-point support bending method (distance between supporting points: 64 mm, test speed: 2 mm/min, test atmosphere: 23°C, 50% RH, absolute dry condition) in accordance with ISO 178. The flexural strength was evaluated according to the following criteria.

⊙: 120 MPa ≤ Flexural strength (best);
○: 110 MPa ≤ Flexural strength < 120 MPa (good);

△: 100 MPa ≤ Flexural strength < 110 MPa (no problem in practical use); and

✕: Flexural strength < 100 MPa (problem in practical use).

(6) Mechanical properties (flexural modulus)

A sufficiently dried resin composition was injection-molded using an injection molding machine (NEX110-12E made by NISSEI PLASTIC INDUSTRIAL, CO., LTD.) to give a multipurpose test specimen A type described in ISO standard 3167.

The flexural modulus of the obtained multipurpose test specimen was measured by a three-point support bending method (distance between supporting points: 64 mm, test speed: 2 mm/min, test atmosphere: 23°C, 50% RH, absolute dry condition) in accordance with ISO 178. The flexural modulus was evaluated according to the following criteria.

⊙: 3.0 GPa ≤ Flexural modulus (best);

○: 2.8 GPa ≤ Flexural modulus < 3.0 GPa (good);

△: 2.5 GPa ≤ Flexural modulus < 2.8 GPa (no problem in practical use); and

✕ : Flexural modulus < 2.5 GPa (problem in practical use).

(7) Pencil hardness

Based on JIS K5600-5-4, the pencil hardness was measured at any 5 points on the surface of the plate-shaped molded body obtained in "(2) Flop index (metallic color tone)" and then evaluated according to the following criteria.

⊙: Pencil hardness at 5 points = B (best); and

✕ : Pencil hardness at at least one point = 2B (problem in practical use).

(8) Flow mark (flow mark reducing property)

The plate-shaped molded body obtained in "(2) Flop index (metallic color tone)" was observed from various angles under a fluorescent lamp having an illuminance of 1000 Lx, and the presence or absence of a flow mark was sensory evaluated with the naked eye. The flow mark is flow unevenness of a metallic pigment, and no flow mark is preferred.

⊙:There is no flow mark over the entire molded body (best);

△: There is a slight flow mark at the gate portion of the molded body, but there is no problem in practical use; and

✕: There is a flow mark over the entire molded body (problem in practical use).

(9) Overall Evaluation

Overall evaluation was made based on the evaluation results of the metallic color tone, the surface glossiness (before abrasion test), the gloss residual ratio, the mechanical properties, the pencil hardness, and the flow mark reducing property.

⊙: All the evaluation results of the properties described above were ⊙;

○: Of all the evaluation results of the properties described above, the lowest evaluation result was ○;

△: Of all the evaluation results of the properties described above, the lowest evaluation result was △; and

✕: Of all the evaluation results of the properties described above, the lowest evaluation result was ✕.

B. Raw materials

Raw materials used in Examples and Comparative Examples are shown below.

(1) Monomer component of polyamide - ε-caprolactam: made by Ube Industries, Ltd.

(2) Cellulose fiber

- KY100G: Celish KY100G made by Daicel FineChem Ltd., including 10% by mass of an unmodified cellulose fiber having an average fiber diameter of 125 nm.
- KY110N: Celish KY110N made by Daicel FineChem Ltd., including 15% by mass of an unmodified cellulose fiber having an average fiber diameter of 125 nm.
- KY100S: Celish KY100S made by Daicel FineChem Ltd., including 25% by mass of an unmodified cellulose fiber having an average fiber diameter of 140 nm.

- Bacterial cellulose (unmodified cellulose)

Into a 200 mL volume Erlenmeyer flask, 50 mL of a culture medium having a composition comprising 0.5% by mass of glucose, 0.5% by mass of polypeptone, 0.5% by mass of yeast extract, and 0.1% by mass of magnesium sulfate heptahydrate was dispensed, and was sterilized by steam at 120°C for 20 minutes in an autoclave. To this culture medium, a platinum loop of Gluconacetobacter xylinus (NBRC 16670) grown in a test tube slant agar medium was inoculated, and the resulting culture was subjected to a static incubation at 30°C for 7 days. After 7 days, a white gel film-like bacterial cellulose was produced in the upper layer of the culture solution.

The bacterial cellulose thus obtained was crushed with a mixer, then repeatedly immersed in water and washed with water, and thus substitution with water was performed, thereby preparing a product including 4.1% by mass of bacterial cellulose having an average fiber diameter of 60 nm.

- Waste thread

Purified water was added to cellulose fiber aggregates sorted as waste threads in production steps of a nonwoven fabric, and the resulting mixture was stirred with a mixer to prepare an aqueous dispersion including 6% by mass of cellulose fibers having an average fiber diameter of 3240 nm.

- TEMPO-catalytically oxidized cellulose fiber (cellulose fiber in which some of hydroxyl groups of cellulose are modified with a hydrophilic substituent):

To 500 mL of an aqueous solution of 780 mg of TEMPO and 75.5 g of sodium bromide dissolved therein was added 500 g (absolute dry) of a bleached and unbeaten kraft pulp (whiteness degree: 85%) from softwood, and the mixture was stirred until the pulp was homogeneously dispersed. Thereto was added an aqueous sodium hypochlorite solution in an amount of 6.0 mmol/g to start an oxidation reaction. As the pH in the system decreased during the reaction, a 3M aqueous sodium hydroxide solution was sequentially added to adjust the reaction system to pH 10. The reaction was terminated when sodium hypochlorite was consumed and the pH in the system showed not change. The mixture after the reaction was filtered through a glass filter to separate the pulp, and the pulp was thoroughly washed with water to give an oxidized pulp. The oxidized pulp obtained in the above step was adjusted to 1.0% (w/v) with water, and treated in an ultra-high pressure homogenizer (20°C, 150 MPa) for three cycles to prepare an aqueous dispersion including 1.0% by mass of TEMPO-catalytically oxidized cellulose fiber having an average fiber diameter of 10 nm.

Analysis of the TEMPO- catalytically oxidized cellulose fiber with $^1$H-NMR, $^{13}$C-NMR, FT-IR, and neutralization titration confirmed that some of hydroxyl groups of cellulose were substituted with carboxyl groups, and the degree of substitution was 0.3.

- Ether-modified cellulose fiber (cellulose fiber in which some of hydroxyl groups of cellulose are modified with a hydrophobic substituent):

To 600 g of softwood bleached kraft pulp (made by Oji Paper Co., Ltd., solid content: 25%), 19.94 kg of water was added to prepare an aqueous suspension liquid having a solid content concentration of 0.75% by mass. The obtained slurry was subjected to mechanical defibration treatment using a bead mill (NVM-2 made by Aimex Co., Ltd.) to obtain cellulose fibers (zirconia bead diameter: 1 mm, bead filling amount: 70%, rotation speed: 2000 rpm, number of treatments: 2). Per centrifuge tube was added 100 g of an aqueous dispersion of the obtained cellulose fibers, and centrifugation (7000 rpm, 20 min) was performed. Then, the supernatant liquid was removed, and a precipitate was taken out. Per centrifuge tube was added 100 g of acetone, and the mixture was stirred well, dispersed in acetone, and centrifuged. Then, the supernatant liquid was removed, and a precipitate was taken out. The above operation was further repeated twice to obtain a cellulose fiber acetone slurry having a solid content of 5% by mass.

Into a 1-L four-necked flask equipped with a stirring blade was charged the obtained cellulose fiber acetone slurry so that the solid content of the cellulose fiber was 5 g. Thereto were added 500 mL of N-methyl-2-pyrrolidone (NMP) and 250 mL of toluene, and the cellulose fibers were dispersed in the NMP/toluene with stirring. A condenser was attached, and the dispersion liquid was heated to 150°C under a nitrogen atmosphere to distill off acetone and water contained in the dispersion liquid together with toluene. Thereafter, the dispersion liquid was cooled down to 40°C, 15 mL of pyridine and 25 g of hexamethyldisilazane (silyl etherification agent) were added thereto, and the mixture was allowed to react under a nitrogen atmosphere for 90 minutes to prepare an NMP dispersion liquid of ether-modified cellulose fibers.

The obtained NMP dispersion liquid of ether-modified cellulose fibers was centrifuged to precipitate cellulose fibers, and thus substitution with water was performed. This procedure was repeated 3 times and the resulting liquid was adjusted with water to prepare an aqueous dispersion including 1.0% by mass of ether-modified cellulose fibers having an average fiber diameter of 100 nm.

Analysis of the ether-modified cellulose fiber with $^1$H-NMR, $^{13}$C-NMR, and FT-IR confirmed that some of hydroxyl groups of cellulose were substituted with hydrophobic silyl ether groups, and the degree of substitution was 0.3.

- Cotton short fiber: Average fiber diameter 16 $\mu$m

(3) Swelling layered silicate

- Swelling fluoromica, "ME-100" made by Co-op Chemical, Co., Ltd. (average particle size: 6.0 $\mu$m)

(4) Metallic pigment

- Aluminum powder: Aluminum paste "Silveeds M100-BP" (average particle size: 10 $\mu$m, average thickness: 0.2 $\mu$m, aluminum component: 90%, polyethylene glycol: 10%, plate-shaped) made by Asahi Kasei Chemicals Corporation
- Pearl mica, "TWINCLE PEARL SXA" (average particle size: 9 $\mu$m, titanium oxide-coated synthetic mica, granular) made by Nihon Koken Kogyo Co., Ltd.

(5) Polyamide

- PA6: Polyamide 6, A1030BRL made by Unitika Ltd.
- PA66: Polyamide 66, Vydyne 50BWFS made by Ascend Performance Materials LLC

Production Example 1

As an aqueous dispersion of cellulose fibers, Celish KY100G was used, and purified water was added thereto and the resulting mixture was stirred with a mixer to prepare an aqueous dispersion having a cellulose fiber content of 3% by mass. With a mixer, 66.67 parts by mass of the aqueous dispersion of cellulose fibers and 100 parts by mass of ε-caprolactam were further stirred and mixed until a uniform dispersion was obtained. Subsequently, the resulting mixed dispersion liquid was charged into a polymerization apparatus, and then heated to 240°C with stirring, and while water vapor was gradually released, the pressure was increased from 0 MPa to 0.5 MPa.

Thereafter, the pressure was released to atmospheric pressure, and a polymerization reaction was performed at 240°C for 1 hour. At the time of completion of the polymerization, the resin composition thus obtained was discharged into a strand form and cut to obtain pellets of polyamide X in which the cellulose fibers were blended in the polyamide resin. The obtained pellets were treated with hot water at 95°C, scoured, and dried to obtain dried pellets of polyamide X.

Production Example 2

The same procedure as in Production Example 1 was performed except that the blending amount of Celish KY100G was changed, thereby obtaining dried pellets of polyamide X.

Production Example 3

The same procedure as in Production Example 1 was performed except that the dispersion liquid of cellulose fibers was changed, thereby obtaining dried pellets of polyamide X.

Production Example 4

With a mixer, 66.67 parts by mass of the aqueous dispersion having a content of the cellulose fiber of 3% by mass, obtained in Production Example 1, and 100 parts by mass of a polyamide 66 salt were stirred and mixed until a uniform solution was obtained. Subsequently, the resulting mixed solution was heated with stirring at 230°C until the internal pressure reached 1.5 MPa. After reaching such pressure, the pressure was maintained by continuing the heating while water vapor was gradually released. At the time when the temperature reached 280°C, the pressure was released to normal pressure, and polymerization was performed for another 1 hour. At the time of completion of the polymerization, the resin composition thus obtained was discharged into a strand form and cut to obtain pellets of polyamide X in which the cellulose fibers were blended in the polyamide resin. The obtained pellets were treated with hot water at 95°C, scoured, and dried to obtain dried pellets of polyamide X. The polyamide 66 salt is an equimolar salt of hexamethylenediamine with adipic acid and is a polyamide prepolymer.

Production Example 5

With respect to 100 parts by mass of ε-caprolactam, 0.4 parts by mass of phosphorous acid, 5 parts by mass of swelling layered silicate, and 5 parts by mass of water were charged, the charged mixture was stirred at 80°C for 1 hour, thereafter stirred at 260°C under 0.7 MPa for 1 hour, and then stirred at 260°C under normal pressure for 1 hour to perform polymerization. At the time of completion of the polymerization, the resin composition thus obtained was discharged into a strand form and cut to obtain pellets of polyamide X in which the swelling layered silicate was blended in the polyamide resin. The obtained pellets were treated with hot water at 95°C, scoured, and dried to obtain dried pellets of polyamide X.

Example 1

A mixture was obtained by dry blending 102 parts by mass of the polyamide X prepared in Production Example 1 and 1 part by mass of a metallic pigment. The resulting mixture was fed into a main hopper of a twin screw extruder (TEM26SS made by Toshiba Machine Co., Ltd., screw diameter 26 mm). The mixture was sufficiently melt-kneaded at 260°C, discharged into a strand form, and cut to obtain pellets of the polyamide resin composition.

Examples 2 to 18 and Comparative Examples 1 to 7 and 9 to 11

The same procedure as in the case of producing the polyamide resin composition of Example 1 except that the resin composition was changed as shown in Table 1 or 2 was performed, thereby obtaining pellets.
Specifically, as the polyamide, the polyamide X of the Production Examples produced so that the composition of the polyamide and the cellulose fiber was set as shown in each Example or Comparative Example (Table 1 or Table 2), or commercially available PA6 or PA66 was used.

Comparative Example 8

In the preparation of the pellets of polyamide X shown in Production Example 2, 40 parts by mass of the aqueous dispersion having a content of the cellulose fiber of 3% by mass, obtained in Production Example 1, and 2 parts by mass of ε-caprolactam were stirred and mixed with a mixer until a uniform dispersion was obtained. Subsequently, the resulting mixed dispersion liquid was charged into a polymerization apparatus, and then heated to 240°C with stirring, and while water vapor was gradually released, the pressure was increased from 0 MPa to 0.5 MPa. Thereafter, the pressure was released to atmospheric pressure, and a polymerization reaction was performed at 240°C for 1 hour. At the time of completion of the polymerization, an attempt was made to discharge the resin composition into a strand form, but the content of the cellulose fiber was high, thus failing to obtain pellets.

Comparative Example 12

A dispersion liquid of cellulose fibers was freeze-dried at -45°C using FD550 made by TOKYO RIKAKIKAI CO., LTD. as a shelf-type freeze-dryer, and pulverized using a pulverizer.
Dry-blended were 2 parts by mass of the obtained cellulose fiber powder and 100 parts by mass of the dried PA6 resin obtained in Comparative Example 1 and fed into a main hopper of a twin screw extruder. The mixture was sufficiently melt-kneaded at 260°C, discharged into a strand form, and cut to obtain pellets of the resin composition.

Comparative Example 13

A mixture was obtained by dry blending 105 parts by mass of the polyamide X prepared in Production Example 5 and 1 part by mass of a metallic pigment. The resulting mixture was fed into a main hopper of a twin screw extruder (TEM26SS made by Toshiba Machine Co., Ltd., screw diameter 26 mm). The mixture was sufficiently melt-kneaded at 260°C, discharged into a strand form, and cut to obtain pellets of the polyamide resin composition.

The compositions of the resin compositions obtained in Examples 1 to 18 and Comparative Examples 1 to 13 and the evaluation results thereof are shown in Tables 1 and 2.

[Table 1]

| | | | | | | | | | | | | | | Surface glossiness | | | | | | | |
|---|---|---|---|---|---|---|---|---|---|---|---|---|---|---|---|---|---|---|---|---|---|
| | Polyamide X Production Example No. | Polyamide resin Type | Content part(s) by mass | Cellulose fiber Type | Average fiber diameter* nm | Average fiber length* μm | Aspect ratio | Content part(s) by mass | Metallic pigment Type | Content part(s) by mass | Timing for adding cellulose fiber | Relative viscosity | Flop index | Before abrasion test | After abrasion test | Residual ratio % | Flexural strength MPa | Flexural modulus GPa | Pencil hardness | Flow mark | Overall evaluation |
| 1 | 1 | PA6 | 100 | KY100G | 56 | 2 | 35.7 | 2 | Aluminum powder | 1 | At polymerization | 2.5 | 13⊙ | 90⊙ | 78 | 87⊙ | 120⊙ | 3.3⊙ | B⊙ | ⊙ | ⊙ |
| 2 | 2 | PA6 | 100 | KY100G | 55 | 2 | 36.4 | 5 | Aluminum powder | 1 | At polymerization | 2.5 | 10○ | 89⊙ | 76 | 85⊙ | 125⊙ | 3.8⊙ | B⊙ | ⊙ | ○ |
| 3 | 2 | PA6 | 100 | KY100G | 67 | 2 | 29.9 | 10 | Aluminum powder | 1 | At polymerization | 2.5 | 8△ | 87○ | 72 | 83○ | 177⊙ | 5.5⊙ | B⊙ | ⊙ | △ |
| 4 | 2 | PA6 | 100 | KY100G | 79 | 2 | 25.3 | 20 | Aluminum powder | 1 | At polymerization | 2.5 | 7△ | 85△ | 66 | 78△ | 226⊙ | 8.1⊙ | B⊙ | ⊙ | △ |
| 5 | 1 | PA6 | 100 | KY100G | 57 | 2 | 35.1 | 2 | Aluminum powder | 0.5 | At polymerization | 2.5 | 11○ | 88○ | 75 | 85⊙ | 118○ | 3.1⊙ | B⊙ | ⊙ | ○ |
| 6 | 1 | PA6 | 100 | KY100G | 55 | 2 | 36.4 | 2 | Aluminum powder | 2 | At polymerization | 2.5 | 13⊙ | 91⊙ | 78 | 86⊙ | 122⊙ | 3.5⊙ | B⊙ | ⊙ | ⊙ |
| 7 | 1 | PA6 | 100 | KY100G | 52 | 2 | 38.5 | 2 | Aluminum powder | 5 | At polymerization | 2.5 | 11○ | 93○ | 77 | 83○ | 129⊙ | 3.7⊙ | B⊙ | ⊙ | ○ |
| 8 | 1 | PA6 | 100 | KY100G | 54 | 2 | 37.0 | 2 | Aluminum powder | 10 | At polymerization | 2.5 | 13⊙ | 95⊙ | 75 | 79△ | 132⊙ | 4.0⊙ | B⊙ | △ | △ |
| 9 | 3 | PA6 | 100 | KY100N | 50 | 3 | 60.0 | 2 | Aluminum powder | 1 | At polymerization | 2.5 | 13⊙ | 90⊙ | 80 | 89⊙ | 129⊙ | 3.7⊙ | B⊙ | ⊙ | ⊙ |
| 10 | 3 | PA6 | 100 | KY100S | 130 | 5 | 38.5 | 2 | Aluminum powder | 1 | At polymerization | 2.5 | 12○ | 89⊙ | 77 | 87⊙ | 113○ | 3.1⊙ | B⊙ | ⊙ | ○ |
| 11 | 3 | PA6 | 100 | Bacterial cellulose fiber | 39 | 3 | 76.9 | 2 | Aluminum powder | 1 | At polymerization | 2.5 | 13⊙ | 91⊙ | 79 | 87⊙ | 134⊙ | 3.9⊙ | B⊙ | ⊙ | ⊙ |
| 12 | 3 | PA6 | 100 | Waste thread | 1300 | 45 | 34.6 | 2 | Aluminum powder | 1 | At polymerization | 2.5 | 11○ | 88○ | 72 | 82○ | 109△ | 3.0⊙ | B⊙ | ⊙ | △ |
| 13 | 3 | PA6 | 100 | TEMPO-catalytically oxidized cellulose fiber | 10 | 0.3 | 30.0 | 2 | Aluminum powder | 1 | At polymerization | 2.5 | 12○ | 88○ | 76 | 86⊙ | 114○ | 3.3⊙ | B⊙ | ⊙ | ○ |
| 14 | 3 | PA6 | 100 | Ether-modified cellulose fiber | 440 | 12 | 27.3 | 2 | Aluminum powder | 1 | At polymerization | 2.5 | 10○ | 87○ | 72 | 83○ | 108△ | 3.0⊙ | B⊙ | ⊙ | △ |
| 15 | 4 | PA66 | 100 | KY100G | 53 | 2 | 37.7 | 2 | Aluminum powder | 1 | At polymerization | 2.7 | 12○ | 89⊙ | 77 | 87⊙ | 132⊙ | 3.6⊙ | B⊙ | ⊙ | ○ |
| 16 | 4 | PA66 | 100 | KY100G | 58 | 2 | 34.5 | 2 | Aluminum powder | 5 | At polymerization | 2.7 | 10○ | 88○ | 75 | 85⊙ | 141⊙ | 3.9⊙ | B⊙ | ⊙ | ○ |
| 17 | 1 | PA6 | 100 | KY100G | 52 | 2 | 38.5 | 2 | Aluminum powder / Pearl mica | 0.5 / 0.5 | At polymerization | 2.5 | 13⊙ | 90⊙ | 78 | 87⊙ | 120⊙ | 3.3⊙ | B⊙ | ⊙ | ⊙ |
| 18 | 1 | PA6 | 100 | KY100G | 55 | 2 | 36.4 | 2 | Pearl mica | 1 | At polymerization | 2.5 | 13⊙ | 89⊙ | 77 | 87⊙ | 120⊙ | 3.3⊙ | B⊙ | ⊙ | ⊙ |

(Examples)

[Table 2]

| | | | | | | | | | | | | | | Surface glossiness | | | | | | | |
|---|---|---|---|---|---|---|---|---|---|---|---|---|---|---|---|---|---|---|---|---|---|
| | Polyamide X Production Example No. | Polyamide resin Type | Content part(s) by mass | Cellulose fiber Type | Average fiber diameter* nm | Average fiber length* μm | Aspect ratio | Content part(s) by mass | Metallic pigment Type | Content part(s) by mass | Timing for adding cellulose fiber | Relative viscosity | Flop index | Before abrasion test | After abrasion test | Residual ratio % | Flexural strength MPa | Flexural modulus GPa | Pencil hardness | Flow mark | Overall evaluation |
| 1 | -* | PA6 | 100 | - | - | - | - | - | - | - | - | 2.5 | 0× | 92⊙ | 65 | 71× | 99× | 2.5△ | 2B× | ⊙ | × |
| 2 | -* | PA66 | 100 | - | - | - | - | - | - | - | - | 2.7 | 0× | 91⊙ | 65 | 71× | 113○ | 2.8○ | 2B× | ⊙ | × |
| 3 | 1 | PA6 | 100 | KY100G | 57 | 2 | 35.1 | 2 | - | - | At polymerization | 2.5 | 0× | 86△ | 70 | 81○ | 115○ | 3.0⊙ | B○ | ⊙ | × |
| 4 | 4 | PA66 | 100 | KY100G | 54 | 2 | 37.0 | 2 | - | - | At polymerization | 2.7 | 0× | 86△ | 70 | 81○ | 128○ | 3.3⊙ | B○ | ⊙ | × |
| 5 | -* | PA6 | 100 | - | - | - | - | - | Aluminum powder | 1 | - | 2.5 | 20⊙ | 94⊙ | 69 | 73× | 103△ | 2.8○ | 2B× | × | × |
| 6 | -* | PA66 | 100 | - | - | - | - | - | Aluminum powder | 1 | - | 2.7 | 19⊙ | 93⊙ | 68 | 73× | 116○ | 3.1⊙ | 2B× | × | × |
| 7 | 2 | PA6 | 100 | KY100G | 48 | 2 | 41.7 | 0.05 | Aluminum powder | 1 | At polymerization | 2.5 | 18⊙ | 94⊙ | 70 | 74× | 106△ | 2.8○ | 2B× | ⊙ | × |
| 8 | 2 | PA6 | 100 | KY100G | - | - | - | 60 | Aluminum powder | 1 | At polymerization | - | - | - | - | - | - | - | - | - | × |
| 9 | 1 | PA6 | 100 | KY100G | 58 | 2 | 34.5 | 2 | Aluminum powder | 0.05 | At polymerization | 2.5 | 2× | 89⊙ | 73 | 82○ | 117○ | 3.1⊙ | B○ | ⊙ | × |
| 10 | 1 | PA6 | 100 | KY100G | 60 | 2 | 33.3 | 2 | Aluminum powder | 15 | At polymerization | 2.5 | 10○ | 88○ | 64 | 73× | 124⊙ | 4.7⊙ | B× | × | × |
| 11 | 3 | PA6 | 100 | Cotton short fiber | 13800 | 230 | 16.7 | 2 | Aluminum powder | 1 | At polymerization | 2.5 | 9△ | 86△ | 64 | 74× | 104△ | 2.8○ | 2B× | ⊙ | × |
| 12 | -* | PA6 | 100 | KY100G | 15000 | 850 | 56.7 | 2 | Aluminum powder | 1 | At kneading | 2.5 | 8△ | 89⊙ | 66 | 74× | 105△ | 2.8○ | 2B× | ⊙ | × |
| 13 | 5 | PA6 | 100 | Swelling fluoromica ** | 2 | 0.2 | 100.0 | 5 | Aluminum powder | 1 | At polymerization | 2.5 | 16⊙ | 93⊙ | 47 | 51× | 155⊙ | 5.5⊙ | 2B× | ⊙ | × |

(Comparative Examples)

*: Commercially available polyamide
**: Filler that is not cellulose fiber.

The polyamide resin compositions of Examples 1 to 18 can give a molded body having a metallic color tone and excellent in pencil hardness, surface glossiness, gloss residual ratio, mechanical properties, and flow mark reducing property.

Since the polyamide resin compositions of Comparative Examples 1 and 2 did not use a cellulose fiber and a metallic pigment, the flop index value, the gloss residual ratio, and the pencil hardness were low.

Since the polyamide resin compositions of Comparative Examples 3 and 4 did not use a metallic pigment, the flop index value was low.

Since the polyamide resin compositions of Comparative Examples 5 and 6 did not use a cellulose fiber, the pencil hardness and the gloss residual ratio were low and the flow mark was noticeable.

In the polyamide resin composition of Comparative Example 7, since the content of the cellulose fiber was small, the pencil hardness and the gloss residual ratio were low.

In the polyamide resin composition of Comparative Example 8, the content of the cellulose fiber was large, thus failing to obtain pellets.

In the polyamide resin composition of Comparative Example 9, since the content of the metallic pigment was small, the flop index value was low.

In the polyamide resin composition of Comparative Example 10, since the content of the metallic pigment was large, the gloss residual ratio was low and the flow mark was noticeable.

Since the polyamide resin composition of Comparative Example 11 used cotton short fiber having an average fiber diameter exceeding 10 $\mu$m as cellulose fiber, the pencil hardness and the gloss residual ratio were low.

In the polyamide resin composition of Comparative Example 12, since cellulose fibers were blended with the polyamide resin by melt-kneading, the average fiber diameter of the cellulose fiber exceeded 10 $\mu$m, and hence the pencil hardness and the gloss residual ratio were low.

Since the polyamide resin composition of Comparative Example 13 did not use a cellulose fiber but used a swelling layered silicate, the pencil hardness and the gloss residual ratio were low.

From the above Examples, it is apparent that from the viewpoint of further improving the metallic color tone, surface glossiness (before abrasion test), and surface hardness (pencil hardness and gloss residual ratio) of the molded body, in a preferred embodiment, the polyamide resin composition satisfies the following conditions:

- The content of the cellulose fiber (B) is from 1 to 8 parts by mass with respect to 100 parts by mass of the polyamide (A); and
- The content of the metallic pigment (C) is from 0.3 to 8 parts by mass with respect to 100 parts by mass of the polyamide (A).

From the above Examples, it is apparent that from the viewpoint of further improving the metallic color tone, surface glossiness (before abrasion test), and surface hardness (pencil hardness and gloss residual ratio) of the molded body, in a more preferred embodiment, the polyamide resin composition satisfies the following conditions:

- The polyamide (A) is polyamide 6;
- The cellulose fiber (B) has an average fiber diameter of 20 to 100 nm;
- The content of the cellulose fiber (B) is from 1 to 4 parts by mass with respect to 100 parts by mass of the polyamide (A); and
- The content of the metallic pigment (C) is from 0.6 to 3 parts by mass with respect to 100 parts by mass of the polyamide (A).

INDUSTRIAL APPLICABILITY

The polyamide resin composition of the present invention is useful for producing a molded body in which one or more properties selected from the group consisting of metallic color tone, surface hardness, surface glossiness, mechanical properties, and flow mark reducing property are required.

The polyamide resin composition of the present invention is particularly useful for producing various automotive parts and various electric and electronic parts.

**Claims**

1. A polyamide resin composition comprising:

    100 parts by mass of a polyamide (A);
    0.1 to 50 parts by mass of a cellulose fiber (B) having an average fiber diameter of 10 $\mu$m or less; and
    0.1 to 12 parts by mass of a metallic pigment (C).

2. The polyamide resin composition according to claim 1, wherein a molded body obtained from the polyamide resin composition has a pencil hardness of B or more as measured in accordance with JIS K5600-5-4.

3. The polyamide resin composition according to claim 1 or 2, wherein after a 5 μm particle polishing film is brought into contact with a molded body obtained from the polyamide resin composition under a vertical overload of 9 N and is rubbed back and forth 10 times, the molded body has a residual ratio of surface glossiness of 75% or more based on JIS Z8741.

4. The polyamide resin composition according to any one of claims 1 to 3, wherein a molded body obtained from the polyamide resin composition has a flop index of 6 or more based on multiangle colorimetry.

5. The polyamide resin composition according to any one of claims 1 to 4, wherein a molded body obtained from the polyamide resin composition has a surface glossiness of 85 or more based on JIS Z8741.

6. The polyamide resin composition according to any one of claims 1 to 5, wherein a molded body obtained from the polyamide resin composition has a flexural strength of 100 MPa or more, based on a three-point support bending method in accordance with ISO 178.

7. The polyamide resin composition according to any one of claims 1 to 6, wherein a molded body obtained from the polyamide resin composition has a flexural modulus of 2.5 GPa or more, based on a three-point support bending method in accordance with ISO 178.

8. The polyamide resin composition according to any one of claims 1 to 7, wherein

    a content of the cellulose fiber (B) is from 1 to 8 parts by mass with respect to 100 parts by mass of the polyamide (A), and
    a content of the metallic pigment (C) is from 0.3 to 8 parts by mass with respect to 100 parts by mass of the polyamide (A).

9. The polyamide resin composition according to any one of claims 1 to 8, wherein

    the polyamide (A) is polyamide 6,
    the cellulose fiber (B) has an average fiber diameter of 20 to 100 nm,
    a content of the cellulose fiber (B) is from 1 to 4 parts by mass with respect to 100 parts by mass of the polyamide (A), and
    a content of the metallic pigment (C) is from 0.6 to 3 parts by mass with respect to 100 parts by mass of the polyamide (A).

10. The polyamide resin composition according to any one of claims 1 to 9, wherein the metallic pigment (C) is one or more kinds of metallic pigments selected from a group consisting of aluminum, iron, nickel, chromium, tin, zinc, indium, titanium, silicon, and copper; alloys thereof; and oxides, nitrides, sulfides and carbides of these metals or alloys; and mica coated with titanium or an oxide thereof.

11. A method for producing the polyamide resin composition according to any one of claims 1 to 10, the method comprising:
    adding a cellulose fiber at a time of polymerization of the polyamide (A).

12. A molded body obtained by molding the polyamide resin composition according to any one of claims 1 to 10.

**INTERNATIONAL SEARCH REPORT**

| International application No. |
| --- |
| PCT/JP2020/037892 |

A.   CLASSIFICATION OF SUBJECT MATTER
C08G  69/00(2006.01)i;  C08K  7/02(2006.01)i;  C08L  1/02(2006.01)i;  C08L
77/00(2006.01)i; C08K 3/013(2018.01)i
FI: C08L77/00; C08L1/02; C08K3/013; C08K7/02; C08G69/00
According to International Patent Classification (IPC) or to both national classification and IPC

B.   FIELDS SEARCHED

Minimum documentation searched (classification system followed by classification symbols)
C08G69/00; C08K7/02; C08L1/02; C08L77/00; C08K3/013

| Documentation searched other than minimum documentation to the extent that such documents are included in the fields searched | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | WO 2014/171430 A1 (UNITIKA LTD.) 23 October 2014 (2014-10-23) entire text | 1–12 |
| A | JP 2017-031246 A (UNITIKA LTD.) 09 February 2017 (2017-02-09) entire text | 1–12 |
| A | JP 2012-167202 A (OLYMPUS CORP.) 06 September 2012 (2012-09-06) entire text | 1–12 |
| A | JP 2009-524732 A (XIOM CORPORATION) 02 July 2009 (2009-07-02) entire text | 1–12 |
| A | WO 2016/148109 A1 (UNITIKA LTD.) 22 September 2016 (2016-09-22) entire text | 1–12 |
| A | WO 1999/013006 A1 (UNITIKA LTD.) 18 March 1999 (1999-03-18) entire text | 1–12 |

☒   Further documents are listed in the continuation of Box C.        ☒   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 15 December 2020 (15.12.2020) | 28 December 2020 (28.12.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**20**

**INTERNATIONAL SEARCH REPORT**

International application No.

PCT/JP2020/037892

| C (Continuation). DOCUMENTS CONSIDERED TO BE RELEVANT | | |
|---|---|---|
| Category* | Citation of document, with indication, where appropriate, of the relevant passages | Relevant to claim No. |
| P, A | JP 2020-059850 A (EMS-PATENT AG.) 16 April 2020 (2020-04-16) entire text | 1-12 |
| P, A | WO 2019/208514 A1 (ASAHI KASEI CORPORATION) 31 October 2019 (2019-10-31) entire text | 1-12 |
| P, A | JP 2019-199540 A (ASAHI KASEI CORPORATION) 21 November 2019 (2019-11-21) entire text | 1-12 |

Form PCT/ISA/210 (continuation of second sheet) (January 2015)

INTERNATIONAL SEARCH REPORT

Information on patent family members

| International application No. |
| --- |
| PCT/JP2020/037892 |

| Patent Documents referred in the Report | Publication Date | Patent Family | Publication Date |
| --- | --- | --- | --- |
| WO 2014/171430 A1 | 23 Oct. 2014 | TW 201504340 A | |
| JP 2017-031246 A | 09 Feb. 2017 | (Family: none) | |
| JP 2012-167202 A | 06 Sep. 2012 | (Family: none) | |
| JP 2009-524732 A | 02 Jul. 2009 | US 2007/0173590 A1 WO 2007/089620 A1 EP 1976945 A1 CN 101437905 A | |
| WO 2016/148109 A1 | 22 Sep. 2016 | EP 3272810 A1 CN 107406671 A | |
| WO 1999/013006 A1 | 18 Mar. 1999 | US 2003/0004248 A1 EP 1022313 A1 | |
| JP 2020-059850 A | 16 Apr. 2020 | US 2020/0109284 A1 EP 3636406 A1 CN 111019342 A KR 10-2020-0041273 A | |
| WO 2019/208514 A1 | 31 Oct. 2019 | JP 2019-190661 A JP 2020-34164 A | |
| JP 2019-199540 A | 21 Nov. 2019 | (Family: none) | |

Form PCT/ISA/210 (patent family annex) (January 2015)

**EP 4 053 187 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9913006 A
- WO 2016148109 A